(19) Europäisches Patentamt
European Patent Office
Office européen des brevets

(11) **EP 3 998 148 B1**

(12) **EUROPEAN PATENT SPECIFICATION**

(45) Date of publication and mention
of the grant of the patent:
**30.08.2023 Bulletin 2023/35**

(21) Application number: **20836849.8**

(22) Date of filing: **07.07.2020**

(51) International Patent Classification (IPC):
*B29C 45/00* (2006.01)   *C08F 8/32* (2006.01)
*C08F 212/08* (2006.01)   *C08L 35/06* (2006.01)
*C08F 222/40* (2006.01)   *C08L 55/02* (2006.01)
*C08L 25/12* (2006.01)   *C08F 222/06* (2006.01)
*C08F 220/44* (2006.01)

(52) Cooperative Patent Classification (CPC):
(C-Sets available)
**B29C 45/0001; C08F 8/32; C08F 212/08;
C08F 222/40; C08L 55/02;** B29K 2025/04;
B29L 2031/3055; C08F 2810/50     (Cont.)

(86) International application number:
**PCT/JP2020/026539**

(87) International publication number:
**WO 2021/006265 (14.01.2021 Gazette 2021/02)**

(54) **MALEIMIDE COPOLYMER, METHOD FOR PRODUCING SAME, RESIN COMPOSITION AND INJECTION MOLDED BODY**

MALEIMID-COPOLYMER, VERFAHREN ZU SEINER HERSTELLUNG, HARZZUSAMMENSETZUNG UND SPRITZGUSSKÖRPER

COPOLYMÈRE DE MALIMIDE, PROCÉDÉ POUR SA PRODUCTION, COMPOSITION DE RÉSINE ET CORPS MOULÉ PAR INJECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2019 JP 2019128312**

(43) Date of publication of application:
**18.05.2022 Bulletin 2022/20**

(73) Proprietor: **Denka Company Limited**
**Tokyo 103-8338 (JP)**

(72) Inventors:
• **NAKANISHI, Soichiro**
**Tokyo 103-8338 (JP)**
• **MATSUMOTO, Masanori**
**Tokyo 103-8338 (JP)**
• **NISHINO, Kohei**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

(56) References cited:
**JP-A- H0 693 043      JP-A- H1 053 620
JP-A- H1 067 825      JP-A- 2001 329 026
JP-A- 2010 505 022     KR-A- 20050 054 382
US-A- 5 140 067      US-A1- 2006 241 277
US-A1- 2010 240 813**

• **Anonymous: "Imirex-P Imirex-C . PAS1460", Polyimilex series, Nippon Shokubai, 1 July 2014 (2014-07-01), pages 1-18, XP009533202,**

(52) Cooperative Patent Classification (CPC): (Cont.)   **C08L 55/02, C08L 35/06**

C-Sets
**C08F 8/32, C08F 212/08;
C08F 8/32, C08F 222/06;
C08F 212/08, C08F 220/44, C08F 222/06,
C08F 212/12;
C08F 212/08, C08F 222/40, C08F 220/44,
C08F 222/06;
C08F 222/40, C08F 212/08, C08F 220/44,
C08F 222/06;
C08L 55/02, C08L 25/12;**

**Description**

### TECHNICAL FIELD

Due to its superior mechanical strength, appearance, chemical resistance, moldability, acrylonitrile-butadiene-styrene copolymer resin (ABS resin) is used in a wide variety of applications including automobiles, home appliances, office automation equipment, housing component, daily necessities. In applications which require heat resistance such as interior material of automobiles, ABS resin formulated with maleimide based copolymer as the heat resistance providing agent is used (for example, Patent Literature 1, Patent Literature 2). Patent Literature 5 discloses maleimide based copolymers in combination with an acrylonitrile-butadiene-styrene copolymer resin which are used as interior/exterior goods for automobiles. Patent Literature 6 relates to resin compositions containing maleimide copolymers and polyphenylene ether resins. Said resin composition is used for injection molding into automobile parts. Patent Literature 7 is directed to resin composition containing maleimide based copolymers and a polybutadiene rubber-reinforced resin. Patent Literature 8 relates to a resin composition containing maleimide based copolymers, an acrylonitrile-butadiene-styrene copolymer resin and a styrene-acrylonitrile copolymer resin.

However, ABS resin formulated with maleimide based copolymer tends to have low chemical resistance. Accordingly, in order to overcome such defects, maleimide based copolymer having vinyl cyanide monomer copolymerized have been proposed (for example, Patent Literature 3, Patent Literature 4). The currently proposed copolymer having vinyl cyanide monomer copolymerized have high heat resistance. On the other hand, there is a desire to further improve flowability.

### CITATION LIST

### PATENT LITERATURE

[Patent Literature 1] JP S57-98536 A
[Patent Literature 2] JP S57-125242 A
[Patent Literature 3] JP 2004-339280 A
[Patent Literature 4] JP 2007-9228 A
[Patent Literature 5] US 2006/241277 A1
[Patent Literature 6] US 2010/240813 A1
[Patent Literature 7] US 5 140 067 A
[Patent Literature 8] KR 2005 0054382 A

### SUMMARY OF INVENTION

### TECHNICAL PROBLEM

An object of the present invention is to provide a maleimide based copolymer which can maintain balanced chemical resistance, heat resistance providing ability, and impact resistance, and allows to obtain a resin composition having superior flowability. The present invention also provides a manufacturing method of such maleimide based copolymer. In addition, the present invention provides a resin composition which is obtained by kneading and mixing the maleimide based copolymer with one or two or more resin selected from the group consisting of ABS resin, acrylonitirle-styrene-acryl based rubber copolymer resin (ASA resin), acrylonitrile-ethylene · propylene based rubber-styrene copolymer resin (AES resin), and styrene-acrylonitrile copolymer resin (SAN resin), and having balanced physical property of chemical resistance, heat resistance, and impact resistance, and having high flowability.

### SOLUTION TO PROBLEM

In the present invention, the inventors have considered that when a maleimide based copolymer having high glass transition temperature and also high flowability, viscosity of resin composition can be lowered without increasing the addition amount of the maleimide based copolymer in the resin composition, thereby contributing to faster molding and higher productivity.

That is, the present invention is as follows.

(1) A maleimide based copolymer comprising aromatic vinyl monomer unit, vinyl cyanide monomer unit, and maleimide monomer unit; wherein the maleimide based copolymer has a glass transition temperature of 165 to 200°C measured in accordance with JIS K-7121 at a temperature elevation rate of 10 °C/min; and a melt mass flow rate of 25 to 80 g/10min measured in accordance with JIS K 7210 at 265°C with 98 N load, wherein the amount of the vinyl cyanide monomer unit contained in the maleimide based copolymer is 7 to 20 mass%.

(2) The maleimide based copolymer of (1), comprising 40 to 59.5 mass% of the aromatic vinyl monomer unit and 35 to 50 mass% of the maleimide monomer unit.

(3) The maleimide based copolymer of (1) or (2), further comprising 0.5 to 10 mass% of dicarboxylic anhydride monomer unit.

(4) The maleimide based copolymer of any one of (1) to (3), wherein content of residual maleimide monomer is less than 300 ppm, measured with gas chromatography.

(5) A manufacturing method of the maleimide based copolymer of any one of (1) to (4), comprising the steps of: initial polymerizing step to start copolymerization by blending entire amount of vinyl cyanide monomer to be charged, 10 to 90 mass% of aromatic vinyl monomer to be charged, and 0 to 30 mass% of unsaturated dicarboxylic anhydride monomer to be charged; middle polymerization step to continue copolymerization while adding 50 to 90 mass% of residual amount of the aromatic vinyl monomer and entirety of residual amount of the unsaturated dicarboxylic anhydride monomer, each added by portions or continuously; final polymerization step to add entirety of residual amount of aromatic vinyl monomer to obtain a copolymer comprising the aromatic vinyl monomer unit, the vinyl cyanide monomer unit, and the dicarboxylic anhydride monomer unit; and imidizing step to imidize the dicarboxylic anhydride monomer unit of the copolymer obtained into the maleimide monomer unit by using ammonia or primary amine.

(6) A resin composition comprising 5 to 40 mass% of the maleimide based copolymer of any one of (1) to (4) and 60 to 95 mass% of one or two or more of a resin selected from the group consisting of acrylonitrile-butadiene-styrene copolymer resin, acrylonitrile-styrene-acryl based rubber copolymer resin, acrylonitrile-ethylene · propylene based rubber-styrene copolymer resin, and styrene-acrylonitrile copolymer resin.

(7) An injection molded body using the resin composition of (6).

(8) Use of the injection molded body of (7) as an interior component or exterior component of an automobile.

## EFFECT OF THE INVENTION

By the present invention, a maleimide based copolymer which can maintain balanced chemical resistance, heat resistance providing ability, and impact resistance, and allows to obtain a resin composition having superior flowability can be obtained. A manufacturing method of such maleimide based copolymer can also be obtained. Further, a resin composition which is obtained by kneading and mixing the maleimide based copolymer with one or two or more resin selected from the group consisting of ABS resin, ASA resin, AES resin, and SAN resin, having balanced physical property of chemical resistance, heat resistance, and impact resistance, and having high flowability can be obtained.

## EMBODIMENTS OF THE INVENTION

<Explanation of Terms>

In the present specification, the phrase "A to B" means A or more and B or less.

Hereinafter, an embodiment of the present invention will be described in detail. The maleimide based copolymer of the present invention contains an aromatic vinyl monomer unit, vinyl cyanide monomer unit, and a maleimide monomer unit.

The aromatic vinyl monomer which can be used in the maleimide based copolymer is used for improving the color phase of the resin composition. For example, styrene, o-methyl styrene, m-methyl styrene, p-methyl styrene, 2,4-dimethyl styrene, ethyl styrene, p-tert-butyl styrene, α-methyl styrene, α -methyl-p-methyl styrene can be mentioned. Among these, styrene is preferable since the effect of improving color phase is high. These aromatic vinyl monomers can be used alone, or two or more of these can be used in combination.

The amount of the aromatic vinyl monomer unit contained in the maleimide based copolymer is preferably 40 to 59.5 mass%, more preferably 45 to 55 mass%. The amount is, particularly for example, 40, 45, 46, 47, 48, 49, 50, 51, 52, 53, 54, 55, or 59.5 mass%, and can be in the range between the two values exemplified herein. The color phase of the resin composition obtained by controlling the amount of the aromatic vinyl monomer unit at 40 mass% or more would not be yellowish, and the heat resistance of the resin composition obtained by controlling the amount of the aromatic vinyl monomer unit at 59.5 mass% or less would be improved.

The vinyl cyanide monomer which can be used in the maleimide based copolymer is used for improving the chemical resistance of the resin composition. For example, acrylonitrile, methacrylonitrile, ethacrylonitrile, fumaronitrile can be mentioned. Among these, acrylonitrile is preferable since the effect of improving chemical resistance is high.

These vinyl cyanide monomers can be used alone, or two or more of these can be used in combination.

The amount of the vinyl cyanide monomer unit contained in the maleimide based copolymer is 7 to 20 mass%, more preferably 7 to 15 mass%. The amount is, particularly for example, 7, 8, 9, 10, 11, 12, 13, 14, 15, or 20 mass%, and can be in the range between the two values exemplified herein. The chemical resistance of the resin composition obtained by controlling the amount of the vinyl cyanide monomer unit at 5 mass% or more would be improved, and the color phase of the resin composition obtained by controlling the amount of the vinyl cyanide monomer unit at 20 mass% or less would not be yellowish.

The maleimide monomer which can be used in the maleimide based copolymer is for improving the heat resistance of the resin composition. For example, N-alkyl maleimide such as N-methyl maleimide, N-butyl maleimide, and N-cyclohexyl maleimide; and N-phenyl maleimide, N-chlorophenyl maleimide, N-methylphenyl maleimide, N-methoxyphenyl maleimide, and N-tribromophenyl maleimide can be mentioned. Among these, N-phenyl maleimide is preferable since the effect of improving heat resistance is high. These maleimide monomers can be used alone, or two or more of these can be used in combination. In order to allow the maleimide monomer unit be contained in the maleimide based copolymer, aromatic vinyl monomer, vinyl cyanide monomer, and maleimide monomer can be copolymerized. In addition, aromatic vinyl monomer, vinyl cyanide monomer, and unsaturated dicarboxylic anhydride monomer described later can be copolymerized, and then the dicarboxylic anhydride monomer unit of the copolymer derived from the unsaturated dicarboxylic anhydride monomer can be imidized by using ammonia or primary amine.

The amount of the maleimide monomer unit contained in the maleimide based copolymer is preferably 35 to 50 mass%, more preferably 37 to 45 mass%. The amount is, particularly for example, 35, 36, 37, 38, 39, 40, 41, 42, 43, 44, 45, 46, 47, 48, 49, or 50 mass%, and can be in the range between the two values exemplified herein. The heat resistance of the maleimide based copolymer obtained by controlling the amount of the maleimide monomer unit to 35 mass% or more would be improved, and the impact strength of the maleimide based copolymer obtained by controlling the amount of the maleimide monomer unit at 50 mass% or less would not be degraded.

The maleimide based copolymer can contain a dicarboxylic anhydride monomer unit which has an effect to improve compatibility of the maleimide based copolymer with other resins. In order to introduce the dicarboxylic anhydride monomer unit into the maleimide based copolymer, unsaturated dicarboxylic anhydride monomer can be copolymerized with the afore-mentioned monomers. Otherwise, imidizing ratio when the copolymer obtained by copolymerizing aromatic vinyl monomer, vinyl cyanide monomer, and unsaturated dicarboxylic anhydride monomer is imidized can be adjusted so that residual dicarboxylic anhydride monomer unit would exist. As the unsaturated dicarboxylic anhydride monomer, for example, maleic anhydride, itaconic anhydride, citraconic acid anhydride, aconitic anhydride can be mentioned. Among these, maleic anhydride is preferable since the ability to improve compatibility is high. These unsaturated dicarboxylic anhydride monomers can be used alone, or two or more of these can be used in combination.

The amount of the dicarboxylic anhydride monomer unit contained in the maleimide based copolymer is preferably 0.5 to 10 mass%, more preferably 0.1 to 2 mass%. The amount is, particularly for example, 0.1, 0.2, 0.3, 0.4, 0.5, 0.6, 0.7, 0.8, 0.9, 1, 1.1, 1.2, 1.3, 1.4, 1.5, 2, 3, 4, 5, 6, 7, 8, 9, or 10 mass%, and can be in the range between the two values exemplified herein. By controlling the amount of the dicarboxylic anhydride monomer unit at 0.5 mass% or more, compatibility of the obtained maleimide based copolymer with resins such as ABS resin would be improved, and by controlling the amount of the dicarboxylic anhydride monomer unit at 10 mass% or less, thermal stability of the resin composition obtained would be improved.

The maleimide based copolymer can have a copolymerizable monomer other than the aromatic vinyl monomer, vinyl cyanide monomer, maleimide monomer, and unsaturated dicarboxylic anhydride monomer copolymerized within an extent which does not impair the effect of the present invention. As the monomer which can be copolymerized with the maleimide based copolymer, for example, acrylic acid ester monomer such as methyl acrylate, ethyl acrylate and butyl acrylate; methacrylic acid ester monomer such as methyl methacrylate and ethyl methacrylate; vinyl carboxylic acid monomer such as acrylic acid and methacrylic acid; acrylamide and methacrylamide can be mentioned for example. These monomers which can be copolymerized with the maleimide based copolymer can be used alone, or two or more of these can be used in combination.

The amount of the residual maleimide monomer contained in the maleimide based copolymer is preferably less than 300 ppm, more preferably less than 230 ppm, and further preferably less than 200 ppm. When the amount of the residual maleimide monomer is controlled at less than 300 ppm, the color phase of the resin composition obtained would be further improved.

The amount of the residual maleimide monomer is a value measured under the following conditions.

Name of Instrument: Gas Chromatograph GC-2010 (available from Shimadzu Corporation)
Column: Capillary column DB-5ms (available from Agilent Technology Co., Ltd.)
Temperature: Inlet temperature of 280 °C, detector temperature of 280 °C
Perform a programmed temperature analysis at a column temperature of 80 °C (initial).
(programmed temperature analysis conditions)

80 °C: held for 12 minutes
80 to 280 °C: temperature elevated for 10 min by 20 °C/min
280 °C: held for 10 minutes

Detector: FID

Procedure: 0.5 g of sample is dissolved in 5 ml of 1,2-dichloroethane solution containing undecane (internal standard, 0.014 g/L). Thereafter, 5 ml of n-hexane is added and the mixture is shaken for 10 to 15 minutes with a shaker to precipitate polymer. With the polymer precipitated in such conditions, only the supernatant is injected into the gas chromatograph. A quantitative value is calculated from the obtained peak area of the maleimide monomer using a coefficient obtained from the internal standard.

The glass transition temperature of the maleimide based copolymer is, in terms of effectively improving heat resistance of a resin such as ABS resin and ASA resin which are to be kneaded and mixed with, 165 to 200 °C, preferably 170 to 200 °C, and more preferably 175 to 185 °C. The glass transition temperature is, particularly for example, 165, 170, 175, 176, 177, 178, 179, 180, 185, 190, 195, or 200 °C, and can be in the range between the two values exemplified herein. The glass transition temperature is a value measured with DSC, and is a value measured by the following instrument and measurement conditions.

Name of Instrument : Differential Scanning Calorimeter, Robot DSC 6200 (available from Seiko Instruments Inc.)
Temperature Elevation Rate: 10 °C/min

In order to raise the glass transition temperature of the maleimide based copolymer, content of the maleimide monomer unit in the maleimide based copolymer can be increased, or other monomer which can raise the glass transition temperature can be copolymerized.

The melt mass flow rate of the maleimide based copolymer is a value measured in accordance with JIS K 7210 at 265°C with 98 N load. The melt mass flow rate is 25 to 80 g/10 min. The melt mass flow rate is, particularly for example, 25, 26, 27, 28, 29, 30, 35, 40, 45, 50, 60, 70, 75, or 80 g/10min, and can be in the range between the two values exemplified herein. When the melt mass flow rate is below 25 g/10min, the flowability of the mixed resin would become low, and when the melt mass flow rate exceeds 80 g/10min, the impact resistance degrades.

In order to decrease the melt mass flow rate of the maleimide based copolymer, the content of the dicarboxylic anhydride monomer unit in the maleimide based copolymer can be increased, or other monomer which can decrease the melt mass flow rate can be copolymerized.

The polymerization method of the maleimide based copolymer includes, for example, solution polymerization, bulk polymerization. Solution polymerization is preferable from the viewpoint that a maleimide based copolymer with a more uniform copolymerization composition can be obtained by polymerizing while adding the monomer by portions for example. The solvent for solution polymerization is preferably non-polymerizable from the viewpoint that formation of byproduct and adverse effect can be suppressed. For example, ketone such as acetone, methyl ethyl ketone, methyl isobutyl ketone, acetophenone; ether such as tetrahydrofuran, 1,4-dioxiane; aromatic hydrocarbon such as benzene, toluene, xylene, chlorobenzene; N,N-dimethylformamide; dimethyl sulfoxide; N-methyl-2-pyrrolidone can be mentioned. In terms of easily removing the solvent during devolatilization and recovery of the maleimide based copolymer, methyl ethyl ketone and methyl isobutyl ketone are preferable. Polymerization process of any one of continuous polymerization process, batch process (batch), and semi-batch process can be applied.

The manufacturing method of the maleimide based copolymer is not particularly limited. Here, the maleimide based copolymer can be obtained preferably by radical polymerization, and the polymerization temperature is preferably in the range of 80 to 150 °C. Polymerization initiator is not particularly limited. For example, known azo compound such as azobisisobutyronitrile, azobiscyclohexanecarbonitrile, azobismethylpropionitrile, azobismethylbutyronitrile; and known organic peroxide such as benzoyl peroxide, t-butyl peroxybenzoate, 1,1-bis(t-butyl peroxy)-3,3,5-trimethylcyclohexane, t-butyl peroxy isopropyl monocarbonate, t-butyl peroxy-2-ethylhexanoate, di-t-butyl peroxide, dicumylperoxide, ethyl-3,3-di-(t-butylperoxy)butyrate can be used. These polymerization initiators can be used alone, or two or more of these can be used in combination. From the viewpoint of the polymerization reaction rate and control of the polymerization ratio, azo compounds and organic peroxides having a 10 hour half-life of 70 to 120°C are preferable. The amount of the polymerization initiator used is not particularly limited. Here, the amount is preferably 0.1 to 1.5 mass% with respect to 100 mass% of the total monomer unit, more preferably 0.1 to 1.0 mass%. When the amount of the polymerization initiator used is 0.1 mass% or more, it is preferable since sufficient polymerization reaction rate can be achieved. When the amount of the polymerization initiator used is 1.5 mass% or less, the reaction can be controlled easily. Accordingly, the target molecular weight can be obtained easily.

The weight average molecular weight of the maleimide based copolymer is 50,000 to 300,000, preferably 50,000 to 200,000. The weight average molecular weight is, particularly for example, 50,000, 60,000, 70,000, 80,000, 90,000, 100,000, 110,000, 120,000, 130,000, 140,000, 150,000, 160,000, 170,000, 180,000, 190,000, 200,000, 250,000, or 300,000, and can be in the range between the two values exemplified herein. When the weight average molecular weight is less than 50,000, the impact resistance would degrade, and when the weight average molecular weight exceeds 300,000, flowability would degrade.

In the manufacture of the maleimide based copolymer, chain transfer agent can be used. The chain transfer agent used is not particularly limited. For example, n-octyl mercaptan, n-dodecyl mercaptan, t-dodecyl mercaptan, α-methyl styrene dimer, ethyl thioglycolate, limonene, terpinolene can be mentioned. The amount of the chain transfer agent used is not particularly limited, so long as it is in the range which allows to obtain the maleimide based copolymer having the target weight average molecular weight. Here, the amount of the chain transfer agent used is preferably 0.01 to 0.8 mass% with respect to 100 mass% of the total monomer, more preferably 0.1 to 0.5 mass%. When the amount of the chain transfer agent used is 0.01 to 0.8 mass%, a maleimide based copolymer having the target weight average molecular weight can be obtained easily.

As the method for introducing the maleimide monomer unit in the maleimide based copolymer, a method in which the maleimide monomer is copolymerized with other monomer (direct method), or a method in which unsaturated dicarboxylic anhydride monomer, aromatic vinyl monomer, and vinyl cyanide monomer are copolymerized beforehand, and then the dicarboxylic anhydride monomer unit in the copolymer is imidized by ammonia or primary amine (post imidizing method) can be mentioned. The post imidizing method is preferable since the amount of residual maleimide monomer in the copolymer becomes small.

As the primary amine, for example, alkyl amine such as methyl amine, ethyl amine, n-propyl amine, iso-propyl amine, n-butyl amine, n-pentyl amine, n-hexyl amine, n-octyl amine, cyclohexyl amine, decyl amine; chlorinated or brominated alkyl amine; aromatic amine such as aniline, toluidine, naphthylamine can be mentioned. Among these, aniline and cyclohexyl amine are preferable. These primary amines can be used alone, or two or more of these can be used in combination. The addition amount of the primary amine is not particularly limited. Here, the addition amount with respect to the dicarboxylic anhydride monomer unit is preferably 0.7 to 1.1 molar equivalent, more preferably 0.85 to 1.05 molar equivalent. When the addition amount with respect to the dicarboxylic anhydride monomer unit in the maleimide based copolymer is 0.7 molar equivalent or more, it is preferable since the thermal stability is excellent. In addition, when the addition amount is 1.1 molar equivalent or less, it is preferable since the amount of residual primary amine in the maleimide based copolymer becomes less.

When introducing the maleimide monomer unit by the post imidizing method, in the reaction of ammonia or primary amine with the dicarboxylic anhydride monomer unit in the copolymer, especially in the reaction to convert the dicarboxylic anhydride monomer unit into the maleimide monomer unit, catalyst can be used as necessary in order to promote the dehydration/ring-closing reaction. There is no particular limitation regarding the kind of the catalyst. Here, for example, tertiary amine can be used. There is no particular limitation regarding the kind of the tertiary amine. Here, as the tertiary amine, for example, trimethylamine, triethylamine, tripropylamine, tributylamine, N,N-dimethylaniline, N,N-diethylaniline can be mentioned. The addition amount of the tertiary amine is not particularly limited. Here, the addition amount is preferably 0.01 molar equivalent or more with respect to the dicarboxylic anhydride monomer unit. The temperature for the imidizing reaction of the present invention is preferably 100 to 250 °C, more preferably 120 to 200 °C. When the temperature for the imidizing reaction is 100 °C or higher, the reaction rate is sufficiently fast. Therefore, it is preferable in view of productivity. When the temperature for the imidizing reaction is 250 °C or lower, it is preferable since the deterioration of the physical property due to thermal degradation of the maleimide based copolymer can be suppressed.

When polymerization is performed by the post imidizing method, polymerization can be carried out to obtain the copolymer before imidizing by charging the entire amount of the aromatic vinyl monomer, vinyl cyanide monomer, and the unsaturated dicarboxylic anhydride monomer in the earlier stage of polymerization. However, since the aromatic vinyl monomer and the unsaturated dicarboxylic anhydride monomer have strong tendency for alternate copolymerization, the aromatic vinyl monomer and the unsaturated dicarboxylic anhydride monomer would be consumed at the initial stage of polymerization, and then copolymer containing large amount of vinyl cyanide monomer unit would be generated in the latter stage of polymerization. As a result, the color phase of the maleimide based copolymer obtained can deteriorate. Further, the composition distribution of the maleimide based copolymer obtained would be large, thereby losing compatibility with the ABS resin when kneaded and mixed. This can result in undesirable physical property. Therefore, in order to obtain a maleimide based copolymer having superior color phase and small composition distribution, it is preferable to perform the following steps.

Initial Polymerization Step : Entire amount of the vinyl cyanide monomer to be charged, 10 to 90 mass% of the aromatic vinyl monomer to be charged, and 0 to 30 mass% of the unsaturated dicarboxylic anhydride monomer to be charged are mixed, and then copolymerization is initiated by charging the mixture at the initial stage of polymerization.

Middle Polymerization Step : The residual amount of the aromatic vinyl monomer to be charged and the residual amount of the unsaturated dicarboxylic anhydride monomer to be charged are each added by portions or continuously while continuing copolymerization.

Final Polymerization Step : After charging the entire amount of the unsaturated dicarboxylic anhydride monomer, aromatic vinyl monomer is added by the amount of 1/10 or more of the amount to be added by portions or continuously, and polymerized.

Imidizing Step : The copolymer thus obtained including aromatic vinyl monomer unit, vinyl cyanide monomer unit, and dicarboxylic anhydride monomer unit is imidized with ammonia or with primary amine to obtain the maleimide based copolymer.

As the method for removing volatile component (devolatilization method) such as solvent or unreacted monomer used in the solution polymerization from the solution after completion of solution copolymerization of the maleimide based copolymer or from the solution after the imidizing step of the maleimide based copolymer, known method can be adopted. For example, a vacuum devolatilization tank equipped with a heater and a devolatilization extruder equipped with a vent can be used. The molten maleimide based copolymer after the devolatilization is transferred to the pelletizing step. The molten copolymer is extruded into strands from a porous die, and processed into pellets by cold cut method, air-cooled hot cutting method or underwater hot cutting method.

By kneading and mixing with various resins, the maleimide based copolymer obtained as such can be used as a heat resistance providing agent of the obtained resin composition. As such various resins, although not particularly limited, ABS resin, ASA resin, AES resin, and SAN resin can be mentioned. Since the maleimide based copolymer and these resins have superior compatibility, high heat resistance providing effect can be achieved. The formulation ratio of the maleimide based copolymer with these resins is preferably 5 to 40 mass% of the maleimide based copolymer and 60 to 95 mass% of the one or two or more of the resin selected from the group consisting of ABS resin, ASA resin, AES resin, and SAN resin. More preferably, the formulation ratio is 10 to 30 mass% of the maleimide based copolymer and 70 to 90 mass% of the one or two or more of the resin selected from the group consisting of ABS resin, ASA resin, AES resin, and SAN resin.

When the formulation ratio of the maleimide based copolymer is in such range, the effect of improving heat resistance of the resin composition can be obtained, and the chemical resistance and the color phase of the resin composition do not deteriorate.

The method for kneading and mixing the maleimide based copolymer with the various resins is not particularly limited. Here, known melting and kneading techniques can be used. As the melting and kneading machine which can be suitably used, screw extruder such as single screw extruder, fully intermeshing co-rotating twin-screw extruder, fully intermeshing counter-rotating twin-screw extruder, non-intermeshing or partially intermeshing twin-screw extruder; banbury mixer; co-kneader; mixing roll can be mentioned.

When kneading and mixing the maleimide based copolymer with these resins, stabilizer, UV absorber, flame retardant, plasticizer, lubricant, glass fiber, inorganic filler, coloring agent, antistatic agent, can be further added.

The resin composition is suitable for injection molded body applications due to its excellent flowability.

As the injection molded body, for example, daily necessity component such as TV, copying machine, telephone, clock, refrigerator, vacuum cleaner, air conditioner, washing machine, PC, DVD/Blu-ray player, audio player, hair dryer, keyboard, tablet, digital camera, attaché case, pachinko machine, home game machine, housing/exterior material of other electrical appliance, meter case, instrument panel, register, control switch, console box, bumper molding, roof rail, emblem, dashboard trim, electronic enclosure, wheel cap, wheel cover, fender flare, door handle, door panel, door mirror, rear lamp housing, head lamp housing, lamp cover, roof spoiler, rear spoiler, antenna cover, front grill, radiator grill, center console, car audio, car navigation system, other automobile interior and exterior material, car port component, sash, door cap, door handle, fence component, system rack, duckboard, toilet seat, window frame, decorative panel, vanity table, lattice fence, terrace deck, housing component such as bench, food tray, toy, sporting good, furniture, musical instrument, semiconductor transport container, plasma dust collection unit can be mentioned. Among these applications, the resin composition is suitable for automobile interior and exterior material which require high heat resistance. Further, since the resin composition has superior flowability, the resin composition is suitable for large injection molded body application such as lamp housing and spoiler.

## EXAMPLE

Hereinafter, detailed explanation is provided with reference to Examples. However, the present invention is not limited to the following Examples.

<Production Example of Maleimide Based Copolymer (A-1)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation.

After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 20.3 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-1. Results of analysis for the maleimide based copolymer are shown in Table 1.

<Production Example of Maleimide Based Copolymer (A-2)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 25 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 2 parts by mass of styrene was added continuously over 2 hours. After adding styrene, the temperature of the reaction mixture was raised to 120 °C, and the reaction was carried out for 1 hour to complete polymerization. Thereafter, 17.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-2. Results of analysis for the maleimide based copolymer are shown in Table 1.

<Production Example of Maleimide Based Copolymer (A-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 35 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 2 parts by mass of styrene was added continuously over 2 hours. After adding styrene, the temperature of the reaction mixture was raised to 120 °C, and the reaction was carried out for 1 hour to complete polymerization. Thereafter, 21.3 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-3. Results of analysis for the maleimide based copolymer are shown in Table 1.

<Production Example of Maleimide Based Copolymer (A-4)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 24 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 13 parts by mass of styrene was added continuously over 2 hours. After adding styrene, the temperature of the reaction mixture was raised to 120 °C, and the reaction was carried out for 1 hour to complete polymerization. Thereafter, 17.4 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-4. Results of analysis for the maleimide based copolymer are shown in Table 1.

<Production Example of Maleimide Based Copolymer (A-5)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.8 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 19.8 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-5. Results of analysis for the maleimide based copolymer are shown in Table 1.

<Production Example of Maleimide Based Copolymer (A-6)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.11 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 20.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-6. Results of analysis for the maleimide based copolymer are shown in Table 1.

<Production Example of Maleimide Based Copolymer (A-7)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 17.2 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-7. Results of analysis for the maleimide based copolymer are shown in Table 1.

<Production Example of Maleimide Based Copolymer (A-8)>

To an autoclave having a capacity of about 120 liters equipped with an agitator, 20 parts by mass of styrene, 15 parts by mass of acrylonitrile, 5 parts by mass of maleic anhydride, 0.1 parts by mass of t-butylperoxy-2-ethylhexanoate, 0.6 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 1 part by mass of styrene was added continuously over 2 hours. After adding styrene, the temperature of the reaction mixture was raised to 120 °C, and the reaction was carried out for 1 hour to complete polymerization. Thereafter, 19.8 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer A-8. Results of analysis for the maleimide based copolymer are shown in Table 1.

<Production Example of Maleimide Based Copolymer (B-1)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.01 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 20.3 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-1. Results of analysis for the maleimide based copolymer B-1 are shown in Table 2.

<Production Example of Maleimide Based Copolymer (B-2)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.01 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 27 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 10 parts by mass of styrene was added continuously over 2 hours. After adding styrene, the temperature of the reaction mixture was raised to 120 °C, and the reaction was carried out for 1 hour to complete polymerization. Thereafter, 18.9 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-2. Results of analysis for the maleimide based copolymer of B-2 are shown in Table 2.

<Production Example of Maleimide Based Copolymer (B-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 20 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 17 parts by mass of styrene was added continuously over 2 hours. After adding styrene, the temperature of the reaction mixture was raised to 120 °C, and the reaction was carried out for 1 hour to complete polymerization. Thereafter, 13.3 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-3. Results of analysis for the maleimide based copolymer B-3 are shown in Table 2.

<Production Example of Maleimide Based Copolymer (B-4)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 16.6 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-4. Results of analysis for the maleimide based copolymer B-4 are shown in Table 2.

<Production Example of Maleimide Based Copolymer (B-5)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.9 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 19.8 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-5. Results of analysis for the maleimide based copolymer B-5 are shown in Table 2.

<Production Example of Maleimide Based Copolymer (B-6)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.9 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 27 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 10 parts by mass of styrene was added continuously over 2 hours. After adding styrene, the temperature of the reaction mixture was raised to 120 °C, and the reaction was carried out for 1 hour to complete polymerization. Thereafter, 18.4 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-6. Results of analysis for the maleimide based copolymer B-6 are shown in Table 2.

<Production Example of Maleimide Based Copolymer (B-7)>

To an autoclave having a capacity of about 120 liters equipped with an agitator, 20 parts by mass of styrene, 10 parts by mass of acrylonitrile, 5 parts by mass of maleic anhydride, 0.1 parts by mass of t-butylperoxy-2-ethylhexanoate, 0.6 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 31 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 6 parts by mass of styrene was added continuously over 2 hours. After adding styrene, the temperature of the reaction mixture was raised to 120 °C, and the reaction was carried out for 1 hour to complete polymerization. Thereafter, 12.6 parts by mass of aniline and 0.2 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide based copolymer B-7. Results of analysis for the maleimide based copolymer are shown in Table 2.

[Table 1]

| Table 1 | | | A-1 | A-2 | A-3 | A-4 | A-5 | A-6 | A-7 | A-8 |
|---|---|---|---|---|---|---|---|---|---|---|
| constitution unit | aromatic vinyl monomer unit | mass% | 42.6 | 48.4 | 38.2 | 50.0 | 42.3 | 42.4 | 42.3 | 38.4 |
| | vinyl cyanide monomer unit | mass% | 7.7 | 8.0 | 7.7 | 8.1 | 7.8 | 7.8 | 7.8 | 11.8 |
| | unsaturated dicarboxylic anhydride monomer unit | mass% | 1.3 | 1.1 | 1.5 | 1.1 | 1.4 | 1.3 | 7.8 | 1.4 |
| | maleimide monomer unit | mass% | 48.3 | 42.5 | 52.5 | 40.9 | 48.5 | 48.6 | 42.0 | 48.5 |
| weight average molecular weight (x10$^4$) | | Mw | 8.8 | 9.6 | 8.4 | 9.6 | 5.4 | 13.3 | 8.5 | 8.0 |
| MFR (265°C、98N) | | g/10min | 30 | 60 | 27 | 75 | 76 | 26 | 27 | 27 |
| glass transition temperature | | °C | 181 | 170 | 182 | 170 | 177 | 184 | 178 | 175 |
| amount of residual maleimide monomer | | ppm | 220 | 200 | 230 | 190 | 220 | 220 | 810 | 220 |

[Table 2]

| Table 2 | | | B-1 | B-2 | B-3 | B-4 | B-5 | B-6 | B-7 |
|---|---|---|---|---|---|---|---|---|---|
| constitution unit | aromatic vinyl monomer unit | mass% | 42.6 | 46.2 | 54.5 | 42.4 | 42.3 | 46.6 | 47.6 |
| | vinyl cyanide monomer unit | mass% | 7.7 | 7.9 | 8.5 | 7.8 | 7.8 | 8.0 | 8.7 |
| | unsaturated dicarboxylic anhydride monomer unit | mass% | 1.3 | 1.2 | 1.1 | 12.6 | 1.4 | 1.2 | 10.5 |
| | maleimide monomer unit | mass% | 48.3 | 44.8 | 36.0 | 37.3 | 48.5 | 44.2 | 33.2 |
| weight average molecular weight (x10$^4$) | | Mw | 13.8 | 12.9 | 4.8 | 4.8 | 3.9 | 3.9 | 4.8 |
| MFR (265°C、98N) | | g/10min | 11 | 20 | 78 | 24 | 50 | 84 | 33 |
| glass transition temperature | | °C | 181 | 176 | 141 | 183 | 160 | 155 | 157 |
| amount of residual maleimide monomer | | ppm | 220 | 200 | 180 | 1350 | 220 | 200 | 990 |

(Weight Average Molecular Weight)

The weight average molecular weight is a value of polystyrene equivalent measured by gel permeation chromatography (GPC). The weight average molecular weight was measured by the following measurement conditions.

Name of Instrument: SYSTEM-21 Shodex (available from Showa Denko K.K.)
Column: PL gel MIXED-B, 3 columns connected in series
Temperature: 40°C
Detection: differential refractive index
Eluent: tetrahydrofuran
Concentration: 2 mass%
Callibration Curve: standard polystyrene (PS) (available from Polymer Laboratories Ltd) was used for preparation

(Melt Mass Flow Rate: MFR)

Melt mass flow rate was measured at 265 °C with 98 N load in accordance with JIS K 7210.

(Glass Transition Temperature)

As the glass transition temperature, the glass transition midpoint temperature (Tmg) of the maleimide based copolymer was measured in accordance with JIS K-7121 by the following instrument and measurement conditions.

Name of Instrument : Robot DSC 6200 (available from Seiko Instruments Inc.)
Temperature Elevation Rate: 10 °C/min

(Amount of Residual Maleimide Monomer)

0.5 g of sample was dissolved in 5 ml of 1,2-dichloroethane solution containing undecane (internal standard, 0.014 g/L). Thereafter, 5 ml of n-hexane was added and the mixture was shaken for 10 to 15 minutes with a shaker to precipitate polymer. With the polymer precipitated in such conditions, only the supernatant was injected into the gas chromatograph. A quantitative value was calculated from the obtained peak area of the maleimide monomer using a coefficient obtained from an internal standard substance.

Name of Instrument: Gas Chromatograph GC-2010 (available from Shimadzu Corporation)
Column: Capillary column DB-5ms (available from Agilent Technology Co., Ltd.)
Temperature: Inlet temperature of 280 °C, detector temperature of 280 °C
Perform a programmed temperature analysis at a column temperature of 80 °C (initial).
(programmed temperature analysis conditions)

80 °C: held for 12 minutes
80 to 280 °C: temperature elevated for 10 min by 20 °C/min
280 °C: held for 10 minutes

Detector: FID

<Examples and Comparative Examples>

Examples 1 to 8, Comparative Examples 1 to 6 (Kneading and Mixig of Maleimide Based Copolymer and ABS Resin)

The maleimide based copolymers A-1 to A-8, and B-1 to B-6, and commercially available maleimide based copolymer without vinyl cyanide monomer unit "MS-NIP" (available from Denka Company Limited), ABS resin "GR-3000" (available from Denka Company Limited), or ASA resin "Luran S 757G" (available from INEOS Styrolution Group GmbH) were blended by the formulation ratio shown in Table 3 and Table 4. Subsequently, twin screw extruder (TEM-35B, available from Toshiba Machine Co.) was used to extrude the material to obtain pellets. These pellets were used to prepare test pieces using an injection molding machine. Various properties were measured with the test pieces. The results are shown in Table 3 and Table 4.

[Table 3]

| Table 3 | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| maleimide based copolymer used | | | – | A-1 | A-2 | A-3 | A-4 | A-5 | A-6 | A-7 | A-8 | A-1 | A-2 |
| evaluation of property | formulation amount | GR-3000 | mass% | 80 | 80 | 80 | 80 | 80 | 80 | 80 | 80 | | 65 |
| | | Luran S 757G | mass% | | | | | | | | | 80 | |
| | | maleimide based copolymer | mass% | 20 | 20 | 20 | 20 | 20 | 20 | 20 | 20 | 20 | 35 |
| | Charpy Impact Strength | with notch kJ/m$^2$ | | 7.1 | 8.9 | 7.3 | 9.8 | 7.1 | 8.2 | 8.2 | 7.7 | 7.7 | 6 |
| | Vicat Softening Temperature | 50N | | 114 | 112 | 114 | 113 | 113 | 115 | 114 | 113 | 113 | 121 |
| | MFR | 220℃、98N | | 10.2 | 12.0 | 10.0 | 12.6 | 12.6 | 9.9 | 10.3 | 10.5 | 10.5 | 10.0 |
| | chemical resistance | – | | A | A | A | A | B | A | A | A | A | A |

[Table 4]

| Table 4 | | | | Comparative Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| maleimide based copolymer used | | | – | B-1 | B-2 | B-3 | B-4 | B-5 | B-6 | B-1 | B-7 | A-2 | MS-NIP |
| evaluation of property | formulation amount | GR-3000 | mass% | 80 | 80 | 80 | 80 | 80 | 80 | | 80 | 55 | 80 |
| | | Luran S 757G | mass% | | | | | | | 80 | | | |
| | | maleimide based copolymer | mass% | 20 | 20 | 20 | 20 | 20 | 20 | 20 | 20 | 45 | 20 |
| | Charpy Impact Strength | with notch kJ/m$^2$ | | 8.2 | 8.7 | 9.3 | 10.4 | 4.5 | 5.7 | 5.6 | 4.5 | 3.1 | 8.7 |
| | Vicat Softening Temperature | 50N | | 114 | 114 | 109 | 116 | 108 | 107 | 111 | 112 | 126 | 113 |
| | MFR | 220℃、98N | | 6.5 | 7.1 | 12.2 | 7.0 | 10.7 | 11.7 | 7.2 | 10.7 | 5.6 | 11.3 |
| | chemical resistance | – | | B | B | B | C | D | D | A | D | C | D |

(Charpy Impact Strength)

The Charpy impact strength was measured using a notched specimen in accordance with JIS K-7111. Edgewise was adopted as the striking direction, relative humidity was 50%, and atmospheric temperature was 23 °C. Here, digital impact tester available from Toyo Seiki Seisaku-sho, Ltd. was used as the measuring instrument.

(Vicat Softening Temperature)

The vicat softening temperature was measured in accordance with JIS K7206. Here, Method 50 (load: 50N, temperature elevation rate 50 °C/hour) was used, and the test piece having the size of 10 mm x 10 mm and 4 mm thickness was used. HDT & VSPT testing device available from Toyo Seiki Seisaku-sho, Ltd. was used as the measuring instrument.

(Melt Mass Flow Rate; MFR)

Melt mass flow rate was measured at 220 °C with 98 N load in accordance with JIS K7210.

(Chemical Resistance)

Cracks of a test piece having a shape of 316 x 20 x 2 mm were observed after 48 hours at 23 °C by a quarter ellipse method having a major radius of 250 mm and a minor radius of 150 mm. In order to eliminate influence of molding strain, the test piece was prepared by press molding the pellet at 260 °C and then cutting out the test piece. Toluene was used as the chemical.

Critical strain was obtained by the following equation.

$$\varepsilon = b/2a^2 \, [1 - (a^2 - b^2)X^2/a^4]^{1.5} \times t \times 100$$

Critical strain: $\varepsilon$, major radius: a, minor radius: b, thickness of test piece: t, crack initiation point: X

The chemical resistance was evaluated from the critical strain according to the following criteria.

A: 0.8 or more, B: 0.6 to 0.7, C: 0.3 to 0.5, D: 0.2 or less

As can be seen from Example 1 to Example 8, the maleimide based copolymers A-1 to A-8 of the present invention were able to realize high glass transition temperature and high melt mass flow rate by decreasing the weight average molecular weight without decreasing the content of the maleimide monomer unit in the composition. However, when the weight average molecular weight was decreased below a certain level, as can be seen in Comparative Example 5 and Comparative Example 6, decrease in heat resistance and decrease in chemical resistance were seen. The maleimide based copolymers B-1 to B-6 are out of the range of the claims of the present invention. The resin compositions of Comparative Example 1 to Comparative Example 6 which were prepared by kneading and mixing these maleimide based copolymers with ABS resin showed inferior results in at least one of impact resistance, flowability, heat resistance, and chemical resistance.

**INDUSTRIAL APPLICABILITY**

The maleimide based copolymer of the present invention can provide a resin composition superior in the balance of properties of chemical resistance, heat resistance, impact resistance, and flowability, by kneading and mixing with compatible ABS resin, ASA resin, AES resin, or SAN resin. The maleimide based copolymer of the present invention can also improve flowability of the mixed resin. Therefore, faster molding and higher productivity can be achieved.

**Claims**

1. A maleimide based copolymer comprising aromatic vinyl monomer unit, vinyl cyanide monomer unit, and maleimide monomer unit; wherein the maleimide based copolymer has a glass transition temperature of 165 to 200°C measured in accordance with JIS K-7121 at a temperature elevation rate of 10 °C/min; and a melt mass flow rate of 25 to 80 g/10min measured in accordance with JIS K 7210 at 265°C with 98 N load,
   **characterized in that** an amount of the vinyl cyanide monomer unit contained in the maleimide based copolymer is 7 to 20 mass%.

2. The maleimide based copolymer of Claim 1, comprising 40 to 59.5 mass% of the aromatic vinyl monomer unit and 35 to 50 mass% of the maleimide monomer unit.

3. The maleimide based copolymer of Claim 1 or Claim 2, further comprising 0.5 to 10 mass% of dicarboxylic anhydride monomer unit.

4. The maleimide based copolymer of any one of Claim 1 to Claim 3, wherein content of residual maleimide monomer is less than 300 ppm measured with gas chromatography according to the description.

5. A manufacturing method of the maleimide based copolymer of any one of Claim 1 to Claim 4, comprising the steps of:

initial polymerizing step to start copolymerization by blending entire amount of vinyl cyanide monomer to be charged, 10 to 90 mass% of aromatic vinyl monomer to be charged, and 0 to 30 mass% of unsaturated dicarboxylic anhydride monomer to be charged;
middle polymerization step to continue copolymerization while adding 50 to 90 mass% of residual amount of the aromatic vinyl monomer and entirety of residual amount of the unsaturated dicarboxylic anhydride monomer, each added by portions or continuously;
final polymerization step to add entirety of residual amount of aromatic vinyl monomer to obtain a copolymer comprising the aromatic vinyl monomer unit, the vinyl cyanide monomer unit, and the dicarboxylic anhydride monomer unit; and
imidizing step to imidize the dicarboxylic anhydride monomer unit of the copolymer obtained into the maleimide monomer unit by using ammonia or primary amine.

6. A resin composition comprising 5 to 40 mass% of the maleimide based copolymer of any one of Claim 1 to Claim 4 and 60 to 95 mass% of one or two or more of a resin selected from the group consisting of acrylonitrile-butadiene-styrene copolymer resin, acrylonitrile-styrene-acryl based rubber copolymer resin, acrylonitrile-ethylene-propylene based rubber-styrene copolymer resin, and styrene-acrylonitrile copolymer resin.

7. An injection molded body using the resin composition of Claim 6.

8. Use of the injection molded body of Claim 7 as an interior component or exterior component of an automobile.

**Patentansprüche**

1. Copolymer auf Maleimidbasis, umfassend eine aromatische Vinylmonomereinheit, eine Vinylcyanidmonomereinheit und eine Maleimid-Monomereinheit; wobei das Copolymer auf Malemidbasis eine Glasübergangstemperatur von 165 bis 200 °C , gemessen gemäß JIS K-7121 bei einer Temperaturerhöhungsrate von 10 °C/min , und eine Schmelzmassenflussrate von 25 bis 80 g/10 min, gemessen gemäß JIS K 7210 bei 265 °C mit 98 N Belastung, aufweist, **dadurch gekennzeichnet, dass** eine Menge der VinylcyanidMonomereinheit, die in dem Copolymer auf Maleimidbasis enthalten ist, 7 bis 20 Massenprozent beträgt.

2. Copolymer auf Maleimidbasis nach Anspruch 1, das 40 bis 59,5 Masse-% der aromatischen Vinylmonomereinheit und 35 bis 50 Masse-% der Maleimid-Monomereinheit umfasst.

3. Copolymer auf Maleimidbasis nach Anspruch 1 oder Anspruch 2, das ferner 0,5 bis 10 Masse-% Dicarbonsäureanhydrid-Monomereinheiten enthält.

4. Copolymer auf Maleimidbasis nach einem der Ansprüche 1 bis 3, wobei ein Gehalt an restlichem Maleimidmonomer weniger als 300 ppm beträgt, gemessen mit Gaschromatographie gemäß der Beschreibung.

5. Verfahren zur Herstellung eines Copolymers auf Maleimidbasis nach einem der Ansprüche 1 bis 4, das die folgenden Schritte umfasst:

anfänglicher Polymerisationsschritt zum Starten der Copolymerisation durch Mischen der gesamten Menge des zuzuführenden Vinylcyanidmonomers, 10 bis 90 Massenprozent des zuzuführenden aromatischen Vinylmonomers und 0 bis 30 Massenprozent des zuzuführenden ungesättigten Dicarbonsäureanhydridmonomers;
mittlerer Polymerisationsschritt zur Fortsetzung der Copolymerisation unter Zugabe von 50 bis 90 Masse-% der Restmenge des aromatischen Vinylmonomers und der gesamten Restmenge des ungesättigten Dicarbonsäureanhydridmonomers, jeweils portionsweise oder kontinuierlich zugegeben;
abschließender Polymerisationsschritt zur vollständigen Zugabe der Restmenge des aromatischen Vinylmonomers, um ein Copolymer zu erhalten, das die aromatische Vinylmonomereinheit, die Vinylcyanidmonomereinheit und die Dicarbonsäureanhydridmonomereinheit umfasst; und
Imidisierungsschritt zur Imidisierung der Dicarbonsäureanhydridmonomereinheit des erhaltenen Copolymers in die Maleimid-Monomereinheit unter Verwendung von Ammoniak oder primärem Amin.

6. Harzzusammensetzung, umfassend 5 bis 40 Massen-% des Copolymers auf Maleimidbasis nach einem der Ansprüche 1 bis 4 und 60 bis 95 Massen-% eines oder zweier oder mehrerer Harze, ausgewählt aus der Gruppe bestehend aus Acrylnitril-Butadien-Styrol-Copolymerharz, Kautschuk-Copolymerharz auf Basis von Acrylnitril-Styrol-Acryl, Kautschuk-Styrol-Copolymerharz auf Basis von Acrylnitril-Ethylen-Propylen und Styrol-Acrylnitril-Copolymerharz.

7. Spritzgegossener Körper unter Verwendung der Harzzusammensetzung nach Anspruch 6.

8. Verwendung des spritzgegossenen Körpers nach Anspruch 7 als Innen- oder Außenkomponente eines Kraftfahrzeugs.


**Revendications**

1. Copolymère à base de maléimide comprenant une unité monomère de vinyle aromatique, une unité monomère de cyanure de vinyle et une unité monomère de maléimide ; dans lequel le copolymère à base de maléimide a une température de transition vitreuse de 165 à 200°C mesurée conformément à JIS K-7121 à un taux d'élévation de température de 10 °C/min ; et un débit massique en fusion de 25 à 80 g/10min mesuré conformément à JIS K 7210 à 265°C avec une charge de 98 N,
**caractérisé en ce qu'**une quantité de l'unité monomère de cyanure de vinyle contenue dans le copolymère à base de maléimide est de 7 à 20 % en masse.

2. Copolymère à base de maléimide de la revendication 1, comprenant 40 à 59,5 % en masse de l'unité monomère de vinyle aromatique et 35 à 50 % en masse de l'unité monomère de maléimide.

3. Copolymère à base de maléimide de la revendication 1 ou de la revendication 2, comprenant en outre 0,5 à 10 % en masse d'unité monomère d'anhydride dicarboxylique.

4. Copolymère à base de maléimide de l'une quelconque des revendications 1 à 3, dans lequel la teneur en monomère de maléimide résiduel est inférieure à 300 ppm mesurée avec la chromatographie en phase gazeuse selon la description.

5. Procédé de fabrication du copolymère à base de maléimide de l'une quelconque des revendications 1 à 4, comprenant les étapes suivantes :

   étape de polymérisation initiale pour démarrer la copolymérisation en mélangeant la quantité totale du monomère de cyanure de vinyle à charger, 10 à 90 % en masse de monomère de vinyle aromatique à charger, et 0 à 30 % en masse de monomère d'anhydride dicarboxylique insaturé à charger ;
   étape de polymérisation intermédiaire pour poursuivre la copolymérisation tout en ajoutant 50 à 90 % en masse de la quantité résiduelle du monomère de vinylique aromatique et la totalité de la quantité résiduelle du monomère d'anhydride dicarboxylique insaturé, chacun ajouté par portions ou en continu ;
   étape de polymérisation finale pour ajouter la totalité de la quantité résiduelle de monomère de vinyle aromatique afin d'obtenir un copolymère comprenant l'unité monomère de vinyle aromatique, l'unité monomère de cyanure de vinyle et l'unité monomère d'anhydride dicarboxylique ; et
   étape d'imidification pour imider l'unité monomère d'anhydride dicarboxylique du copolymère obtenu dans l'unité monomère de maléimide en utilisant de l'ammoniaque ou de l'amine primaire.

6. Composition de résine comprenant 5 à 40 % en masse du copolymère à base de maléimide de l'une quelconque des revendications 1 à 4 et 60 à 95 % en masse d'une ou de deux ou plus d'une résine sélectionnée/s dans le groupe constitué par la résine de copolymère acrylonitrile-butadiène-styrène, la résine de copolymère caoutchouc à base d'acrylonitrile-styrène-acryle, la résine de copolymère caoutchouc-styrène à base d'acrylonitrile-éthylène-propylène, et la résine de copolymère styrène-acrylonitrile.

**7.** Corps moulé par injection à l'aide de la composition de résine de la revendication 6.

**8.** Utilisation du corps moulé par injection de la revendication 7 comme composant intérieur ou extérieur d'une automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5798536 A
- JP S57125242 A
- JP 2004339280 A
- JP 2007009228 A
- US 2006241277 A1
- US 2010240813 A1
- US 5140067 A
- KR 20050054382 A